(19) Europäisches Patentamt
European Patent Office
Office européen des brevets

(11) EP 2 330 393 B1

(12) EUROPEAN PATENT SPECIFICATION

(45) Date of publication and mention
of the grant of the patent:
**03.04.2013 Bulletin 2013/14**

(51) Int Cl.:
*G01F 23/26* (2006.01)   *G01N 33/28* (2006.01)

(21) Application number: **09178122.9**

(22) Date of filing: **04.12.2009**

(54) **In-line Fuel Properties Measurement Unit**

In-line Messeinheit für Kraftstoffeigenschaften

Unité de mesure des propriétés de carburants en ligne

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**08.06.2011 Bulletin 2011/23**

(73) Proprietor: **Parker Hannifin Corp.**
**Cleveland, OH 44124-4141 (US)**

(72) Inventors:
• **Austerlitz, Howard**
**Stony Brook, NY 11790 (US)**
• **Bueter, Ron**
**Cary, NC 27511 (US)**
• **Nektaredes, Alexander**
**Stony Brook, NY 11790 (US)**

• **King, Ron**
**Medford, NY 11763 (US)**
• **Savino, Mark**
**West Sayville, NY 11796 (US)**
• **Standish, Michael C**
**Kings Park, NY 11754 (US)**
• **Wood, Stanley**
**Middle Island, NY 11953 (US)**

(74) Representative: **Belcher, Simon James**
**Urquhart-Dykes & Lord LLP**
**Tower North Central**
**Merrion Way**
**Leeds LS2 8PA (GB)**

(56) References cited:
**DE-A1- 10 155 371    US-A- 4 262 531**
**US-A- 5 345 811    US-A1- 2009 013 798**

**Description**

The present invention relates generally to fluid gauging and, more particularly, to a fuel gauging device for determining properties of fuel provided to a vehicle, such as an aircraft.

Accurate fuel gauging in an aircraft plays an important part in the economic operation of the aircraft. If the quantity of fuel on an aircraft can be measured accurately and reliably it enables the minimum amount of fuel to be carried without any risk of danger. In a modem aircraft the weight of fuel can account for half the total weight of the aircraft. By reducing the amount of fuel carried, more passengers or freight can be carried. Alternatively, it can enable the aircraft to have a longer range and reduce the need for refuelling stops.

Measurement of the quantity of fuel within an aircraft's fuel-tanks is commonly performed by means of one or more capacitive probes arranged for immersion in fuel in the tank. The capacitance of the probe varies in accordance with the depth of fuel in the tank, thereby enabling an indication of fuel level to be obtained. Changes in permittivity of fuel which would affect the capacitance of the probe can be compensated for by use of a permittivity cell (which may be in the form of a parallel-plate capacitor of open construction) mounted at the bottom of the fuel-tank, so as always to be immersed in any fuel present. An indication of volume may be obtained directly if the tank is of a regular shape, that is, if the volume of fuel present varies in a linear fashion with the depth of fuel. For irregularly shaped tanks the probe may be suitably-shaped such that the surface area of the plates covered by fuel varies in a non-linear fashion with depth but in a manner that is directly related to the volume of fuel present. Alternatively, the output of the probe may be supplied to a computer in which is stored a model of the fuel-tank from which can be obtained an indication of the volume with knowledge of the fuel depth.

In many applications, such as, for example, in aircraft, it is necessary to have an indication of the fuel mass rather than its volume. The mass of fuel can be readily determined by measuring its density with some form of densitometer. Most modem aircraft are equipped with several fuel-tanks and, because of the variations in density between different fuels, such as might be supplied to different tanks during refuelling stops at different airports, it is necessary to obtain a measure of the density of each of the fuel mixtures within the different tanks.

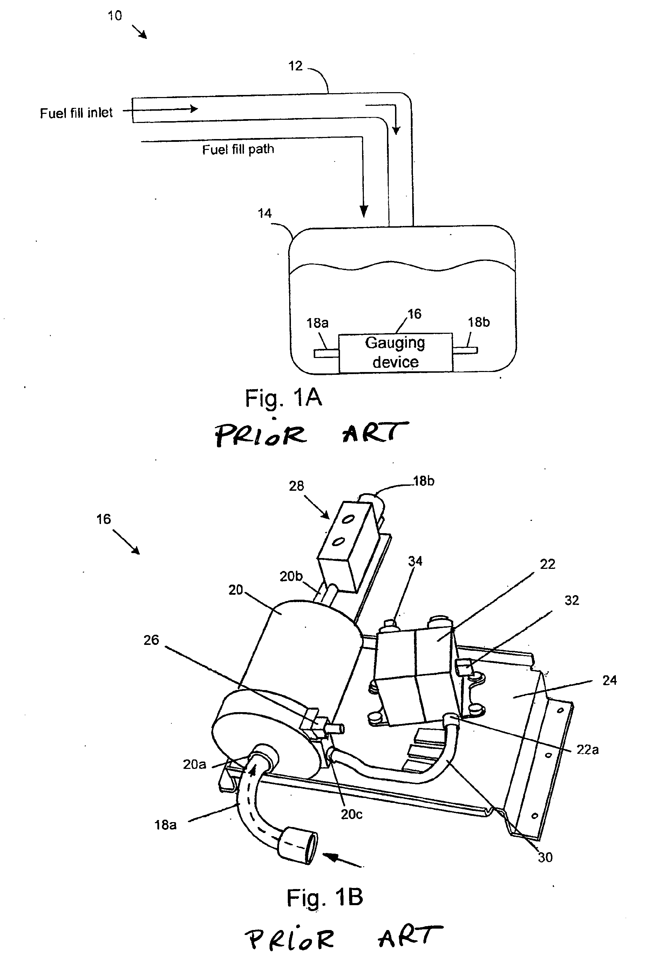

Conventional fuel gauging devices typically reside in the aircraft fuel tank as shown in Fig. 1A. More particularly, a conventional aircraft fuel system 10 may include a fuel fill pipe 12 coupled to a fuel tank 14 so as to enable fuel to be delivered to the fuel tank. Mounted to a bottom portion of the fuel tank 14 is a conventional gauging device 16, wherein the gauging device 16 includes a feed pipe 18a for sampling fuel stored in the tank 14 and a discharge pipe 18b for providing the sampled fuel back to the tank. With further reference to Fig. 1B, the conventional fuel gauging device 16 comprises a compensator 20 and a densitometer 22 arranged on a mounting plate 24. The mounting plate 24 is configured for attachment inside a fuel tank 14, such as a lower portion of the fuel tank. The compensator 20 receives a fraction of the fuel delivered to the fuel tank via feed pipe 18a, which is coupled to an input port 20a of the compensator 20. A portion of the fuel delivered to the input port 20a passes through the compensator to output port 20b, which returns the fuel to the fuel tank 14 via discharge pipe 18b. The remaining portion of the fuel is provided to a second output port 20c for delivery to the densitometer 22 as described below. Both the compensator and the densitometer experience relatively low fluid flow rates and are sensitive to the accumulation of gas bubbles that such low flow rates encourage.

The compensator 20 includes a temperature probe 26 for measuring a temperature of the fuel passing through the compensator 20, and a capacitive measurement circuit (not shown) for determining a permittivity of the fuel. The permittivity as determined from the capacitive measurement circuit is corrected based on the measured temperature of the fuel, and a signal corresponding to the measurement is provided at signal terminals 28. Preferably, the compensator is factory-calibrated to be within a known capacitance range.

Moving to the densitometer 22, an input port 22a of the densitometer 22 is coupled to the output port 20c of the compensator 20 via a densitometer feed pipe 30, and an output port (not shown in Fig. 1) of the densitometer 22 returns the fuel to the fuel tank 14. The densitometer 22 includes measurement circuitry (not shown) for measuring the density of the fuel, and a temperature probe 32 for correcting the measured density. A signal corresponding to the fuel density is provided at signal terminals 34. The densitometer also contains a small circuit card containing resistors that represent its calibration data (within a limited tolerance).

Conventional fuel gauging devices only measure a fraction of the fuel delivered to the tank and, thus, there are uncertainties regarding the accuracy of the fuel properties measurement, which leads to uncertainties with respect the mass of the fuel delivered to the fuel tank. Further, conventional fuel gauging devices are large, heavy and expensive assemblies. Since there may be multiple fuel gauging devices on a single vehicle, the weight and cost can be significant, which is undesirable in a vehicle such as an aircraft. Also, since the fuel seen by the compensator is not the same fuel seen by the densitometer, the temperature of the fuel monitored by the respective devices may be different. This necessitates two separate temperature probes (one at the compensator and one at the densitometer) to ensure the respective devices receive accurate data with respect to fuel temperature. In addition, the low flow rates these devices work with makes them more prone to problems caused by the accumulation of gas bubbles.

US-4262531 discloses a system for indicating the mass of fuel in aircraft fuel tanks. Fuel from all of the tanks is passed through a permittivity cell and a densitometer. The permittivity cell and the densitometer supply output signals to a computing unit.

A fuel gauging device in accordance with the present invention is configured for in-line placement with the vehicle's fuel filling system. In this manner, the fuel gauging device sees all fuel delivered to the vehicle, instead of just a fraction of the fuel as in conventional fuel gauging devices. This enables highly accurate measurements of the fuel properties and, thus, of the mass of the fuel delivered to the fuel tank. Further, the fuel gauging device in accordance with the invention includes a compensator comprising a first flow passage and arranged in series with a densitometer. Thus, the compensator and densitometer see the same fuel and, therefore, only a single temperature probe is needed for the fuel gauging device.

Accordingly, the present invention provides an in-line fuel properties measurement unit (IFPMU) for in-line assembly in a fluid flow path, in particular a fuel flow path of an aircraft, as defined in claim 1.

The densitometer section comprises a second flow passage through which fluid can flow, the densitometer section being configured to measure a density of fluid passing through the second flow passage. Additionally, the first and second flow passages are arranged in-line with each other such that fluid flowing through one of the first flow passage and the second flow passage also flows through the other of the first flow passage and the second flow passage. Alternatively, the fluid flow direction can be reversed and the densitometer section can be the flow inlet.

An inner member provided in the first flow passage may include a flow passage formed therein.

The IFPMU can further include circuitry configured to store at least one of information that uniquely identifies the IFPMU or calibration information for the compensator section and/or densitometer section. The circuitry can be formed on a circuit board, and the circuit board can be arranged between the compensator section and the densitometer section. The circuit board can include an opening formed therein to correspond with the first and second flow passages. The circuit board includes at least one first tab electrically coupled to both the outer member and the inner member, and at least one second tab electrically connected to the intermediate member. This circuit board also provides a high-pressure, fluid-tight seal between the compensator and densitometer sections, via the use of o-rings, for example.

The densitometer section can include a sensor element arranged within the second flow passage, the sensor element configured to obtain data corresponding to a density of the fluid passing through the second flow passage. Further, the densitometer section or the compensator section should include a temperature probe arranged in the flow path of the one of the respective sections. Precise temperature measurements ensure accurate calculation of fluid properties.

According to another aspect of the invention, a vehicle fuel storage system includes at least one storage tank, and the IFPMU as described herein, wherein the IFPMU is in-line with fuel provided to the storage tank. The vehicle fuel storage system can further include a fuel pipe for providing fuel to the storage tank, wherein the IFPMU is arranged in-line with the fuel pipe. Further, the IFPMU can be arranged at least partially in at least one storage tank.

The vehicle fuel storage system may also include a fuel gauging system operatively coupled to the IFPMU. The gauging system can be configured to determine a mass of fuel delivered to the storage tank based on data obtained by the IFPMU.

Embodiments of the invention are described below by way of example with reference to the accompanying drawings, in which:

Fig. 1A is a schematic diagram illustrating a conventional aircraft fuel filling and storage system.
Fig. 1B illustrates a conventional fuel gauging device.
Fig. 2 is a schematic diagram of an exemplary aircraft fuel filling and storage system in accordance with the present invention.
Fig. 3 illustrates an exploded view of an exemplary in-line fuel properties measurement unit in accordance with the present invention.
Fig. 4 illustrates an assembled in-line fuel properties measurement unit in accordance with the present invention.
Fig. 5A illustrates an exemplary densitometer section of the in-line fuel properties measurement unit in accordance with the present invention.
Fig. 5B is a cross sectional view of a fluid density sensing element that can be used in the densitometer section of Fig. 5A.
Fig. 5C is a top view of the disk shaped member driving coils and pickup coils of the sensing element of Fig. 5B.
Fig. 6 illustrates an end view of exemplary compensator section of the in-line fuel properties measurement unit in accordance with the present invention.
Fig. 7 illustrates a perspective view of the compensator section of Fig. 6.
Fig. 8 illustrates an exemplary circuit card of the in-line fuel properties measurement unit in accordance with the present invention.

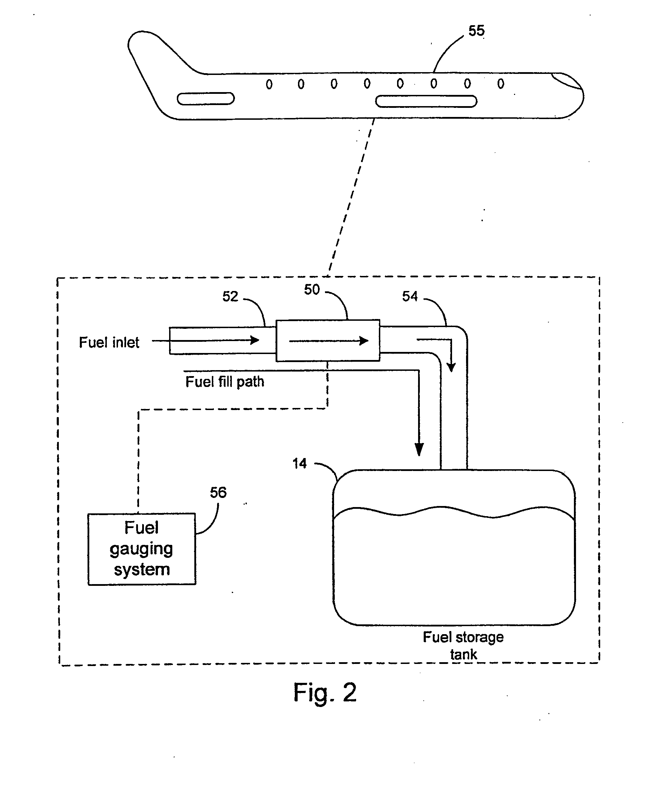

The in-line fuel properties measurement unit (IFPMU) of the invention is configured to measure the density, permittivity and temperature of fuel as the fuel is uploaded into the aircraft's fuel tank. With reference to Fig. 2, the IFPMU 50 may be configured in a pipe configuration to enable placement in-line (in series) with fuel filling pipes 52 and 54 of an aircraft 55, thereby exposing the IFPMU 50 to the full refuelling pressure and flow rate. While the IFPMU 50 is shown external from the tank 14, it is noted that the IFPMU can be mounted to the tank 14 or even partially in the tank 14. Preferably, the IFPMU 50 is configured to present minimum resistance and disturbance to the fuel flow in the filling pipes 52 and 54. Data provided by the IFPMU 50 is provided to the aircraft's fuel gauging system 56 to calculate the mass and other properties of the fuel on the aircraft using conventional techniques.

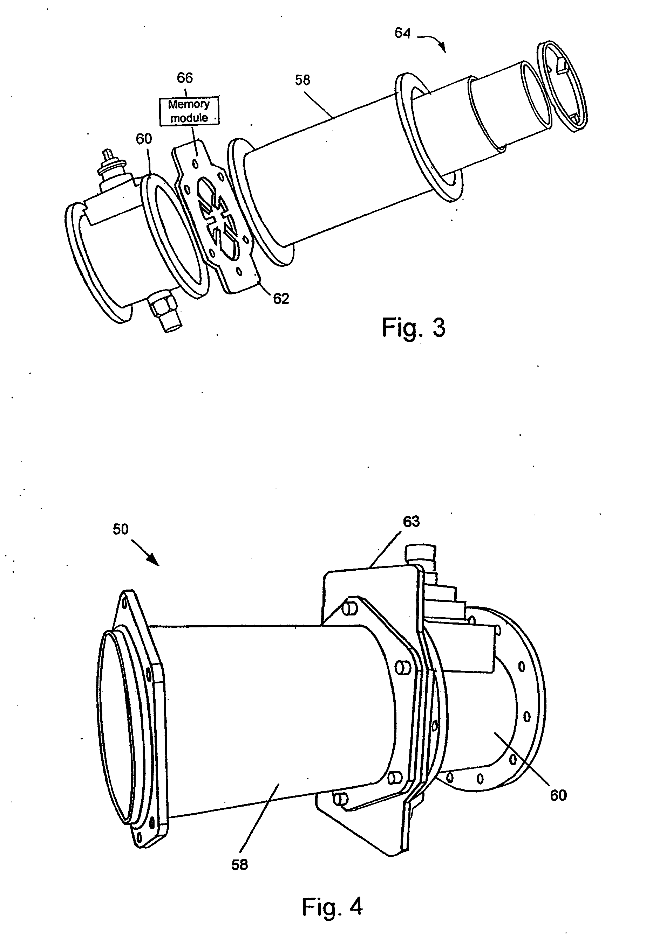

With further reference to Figs. 3 and 4, there are shown exploded and assembled views of an exemplary IFPMU 50 in accordance with the invention. The IFPMU 50 in accordance with the present invention is lighter than conventional fuel properties measurement units, and is exposed to the entire fuel flow, which allows the IFPMU 50 to measure fuel properties more accurately. Further, and as described in more detail below, the IFPMU can include detailed calibration information, making the IFPMU 50 much more accurate than conventional fuel properties measurement units.

The IFPMU 50 includes a compensator section 58 for measuring a permittivity of the fuel, and a densitometer section 60 for measuring a density and temperature of the fuel. Preferably, the compensator and densitometer sections are kept separate to simplify construction and calibration, although they may be formed as an integral unit. The compensator section 58 and the densitometer section 60 are coupled to each other via an electronic circuit card 62 (e.g., a circular circuit card sandwiched between the compensator section and the densitometer section), which, as described in more detail below, makes electrical contact with metal cylinders 64 of the compensator section 58. The circuit card configuration eliminates the need for wires, which can break and present intrinsic safety electrical arcing hazards.

Preferably, the IFPMU 50 includes identification information that uniquely identifies the particular IFPMU. This identification information, which may be a serial number or other identifier, preferably is a passive identifier that may be hardcoded on the IFPMU 50 using, for example, a plurality of resistors or jumpers, wherein each resistor/jumper represents at least part of a character or number of the identifier. As described below, the identification information may be used by the fuel gauging system 56 (or other system) to retrieve calibration information corresponding to the particular IFPMU 50.

The IFPMU 50 also may include an electronic memory module 66 for storing calibration information for the entire assembly. The calibration information can include calibration coefficients for both the densitometer and the compensator, wherein the coefficients correspond to different temperatures. The memory module may be formed as part of the circuit card 62, or it may be formed separate from the circuit card. The memory module 66, in addition to or instead of storing calibration information, may store information corresponding to the IFPMU identifier, such as a serial number or other identifier.

In calibrating the compensator section 58, values for dry capacitance $C_{dry}$ (F) and effective capacitance $C_{eff}$ (F) are established and stored in memory. As fuel passes through the compensator section 58, the capacitance value is measured $C_{meas}$ (Farads) and the dielectric constant K (F.m$^{-1}$) is calculated, for example, using equation 1.

$$(K - 1) = \left( \frac{C_{meas} - C_{dry}}{C_{eff}} \right) \qquad \text{Eq. 1}$$

With respect to the densitometer section 60, during refuel the frequency of oscillation $f_o$ (Hz) of the densitometer section 60 is measured and, using equation 2, the frequency $f_d$ (Hz) is calculated ($f_d$ is used to compute density as described below), in which $T_f$ (°F) is the measured temperature of the fuel, and TEC (°F$^{-1}$) is the thermoelastic coefficient for the densitometer section (e.g., between 10$^{-6}$ and 15$\times$10$^{-6}$ in integral steps).

$$f_d = f_o \left( 1 - TEC \times \left( T_f - 10 \right) \right) \qquad \text{Eq. 2}$$

For use in equation 2, it should be noted that a fuel temperature $T_c$ which is measured in degrees centigrade is converted to a fuel temperature $T_f$ in degrees Fahrenheit by the following formula:

$$T_f = \left( T_c \times 1.8 \right) + 32$$

Similarly, the thermoelastic coefficient for the densitometer section which is measured in reciprocal degrees centigrade $TEC_c$ is converted to a thermoelastic coefficient in reciprocal degrees Fahrenheit using the formula:

$$TEC = \frac{TEC_c}{1.8}$$

On this basis, equation 2 can be rewritten as:

$$f_d = f_o\left(1 - \frac{TEC_c}{1.8} \times \left(1.8T_c + 22\right)\right)$$

The frequency $f_d$ along with coefficients $L_0$, $L_2$, and TEC (which can be stored in memory) are used in equation 3 to determine an initial density of the fuel. $L_0$ is an integer (e.g., about 3000), and $L_2$ is a real number accurate to three decimal places. The initial density then is multiplied by the M factor to arrive at the calculated fuel density, where the M factor is a real number between 0 and 5 in steps of 0.1. The actual values for $L_0$, $L_2$, the M factor and TEC may be determined empirically during calibration of the densitometer.

To improve the accuracy of the densitometer calculations further , calibration data can include separate coefficients for different temperatures. The software performing the density calculation would use the coefficients that correspond to the currently measured fuel temperature.

$$D = L_0 + \left(L_2 \times f_d{}^2\right) \qquad\qquad \text{Eq. 3}$$

In the event the memory module 66 fails, the calibration information, in addition to being stored in the memory module 66, may be stored external to the IFPMU 50 and associated with the IFPMU's identifier. In this manner, failure of the memory module 66 does not render the IFPMU inoperative. For example, upon initial power up the fuel gauging system 56 may read the calibration data from the IFPMU memory module 66, and store the information in memory of the system 56 along with the identifier. Then, should the memory module 66 fail, the calibration information can be retrieved from the fuel gauging system's memory based on the identifier (the identifier can be a passive identifier that is independent of the memory module 66). Alternatively, the calibration data can be loaded via other means, such as a memory stick or RFID tag.

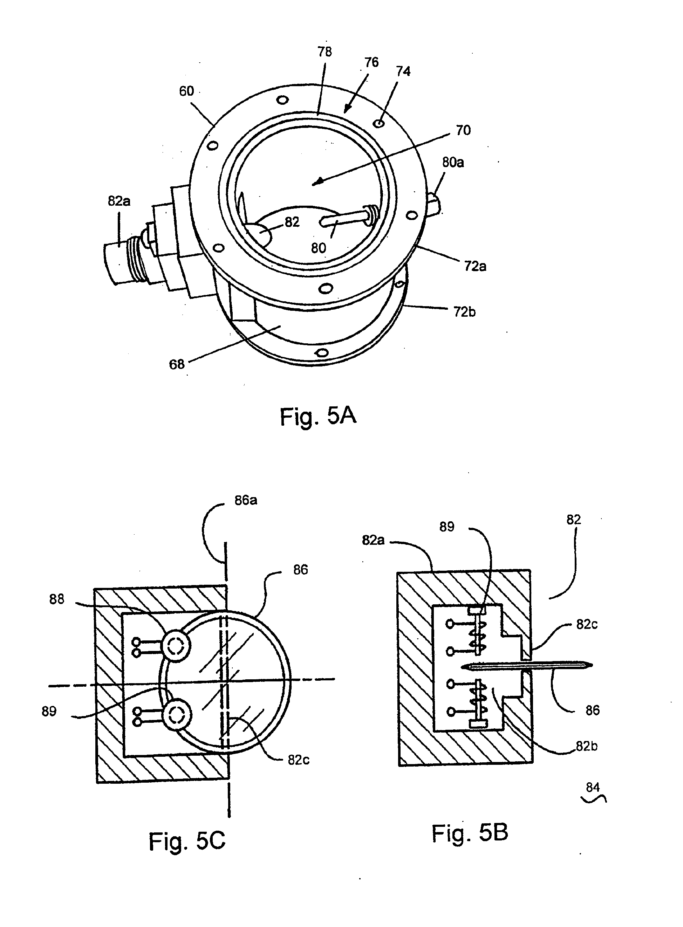

Referring now to Fig. 5A, an exemplary densitometer section 60 in accordance with the present invention is shown. The exemplary densitometer section is formed having an annular tube section 68, thereby defining a flow passage 70 through which fluid may flow. Although the densitometer section is shown having an annular shape, other shapes are possible depending of the specific requirements of the application. Flanges 72a and 72b are formed on respective ends of the densitometer section 60 for coupling to another device (e.g., the compensator section 58, fuel delivery pipes 52 or 54, and/or tank 14). Each flange 72a and 72b includes a plurality of bores 74 for receiving fasteners (not shown) to couple the densitometer section 60 to the compensator section 58, fuel delivery pipes 52 or 54 and/or tank 14. Additionally, the face of each flange 72a and 72b may include a groove or recess 76 for receiving a sealing member 78, such as an O-ring, for example. Arranged within the flow passage 70 is a temperature sensor 80, such as an RTD temperature sensor, and a density sensing element 82.

The temperature sensor 80 obtains data corresponding to temperature of fluid flowing through the flow passage 70 using known techniques. Electrical connector 80a provides a means for communicating the temperature data collected by the temperature sensor to the gauging system 56. It is noted that while the temperature sensor 80 is shown as part of the densitometer section 60, the temperature sensor may alternatively be placed in the compensator section 58, or both the densitometer section 60 and the compensator section 58 may include a temperature sensor. The temperature sensor could also be mounted directly on the circuit card, or even embedded into the circuit card, so that it has no exposed conductors (for intrinsic safety considerations).

With additional reference to Figs. 5B and 5C, the sensing element 82 has a body 82a with an internal chamber 82b. A wall 82c separates chamber 82b from the fluid which surrounds the sensing element which is generally indicated 84. A disk shaped member 86 extends through the wall 82c where it is fixed. As shown in Fig. 5C, wall 82C is a straight wall and is coaxial with a first axis 86a through a centre of disk shaped member 86. Wall 82c is thinned in the area where member 86 passes through it as shown in Fig. 5B.

Disk shaped member 86 is a relatively thin flat disk of unitary construction, and preferably tapered about its periphery to a pointed edge. The disk can be approximately 1.25 inches in diameter and may be made ofNi-Span-C nickel iron alloy, which is a magnetic material. Other materials and dimensional relationships may also be used.

A pair of driving coils 88 (only one of which is shown in FIG. 5C) are mounted inside chamber 82b. Preferably, driving coils are mounted in opposed fashion such that there is one on each side of member 86, although it is possible that both driving coils are on one side of the disk and both pick up coils may be on the other side of the disk, or only one driving coil may be used, or other combinations may be used. The driving coils are positioned adjacent an outer periphery of member 86. The driving coils are conventional electromagnetic coils which are comprised of a magnet and pole piece, and a coil as schematically shown in Fig. 5B. As is shown more clearly in Fig. 5C, driving coils 88 are positioned approximately 45 degrees from axis 86a, and are used to impart motion to member 86 at a first location on the disk adjacent the driving coils.

A pair of pickup coils 89 is also mounted inside chamber 82b of the sensing element 82. Pickup coils 89 can be conventional electromagnetic coils similar to driving coils 88. The pickup coils are positioned adjacent a second location on the disk 86 which is approximately 90 degrees from the position of the driving coils. The pick up coils are used to measure the displacement of member 86 at the second location.

The driving and pickup coils are electrically connected to phase lock loop (PLL) circuitry (not shown) that is designed to vibrate the disk at a resonant frequency (the PLL may be formed on the circuit card 62). The density of the fluid to be measured creates a mass loading effect on the external part of the disk 86, which changes the disk's resonant frequency in a manner that is correlated to the density of the fluid, and data corresponding to the density of the fluid is communicated to the gauging system 56 via electrical connector 82a. From the resonant frequency of the disk 86, the density of the fluid can be calculated based on established physical relationships. Further details regarding the vibrating disk and methods of calculating density are disclosed in US-5345811.

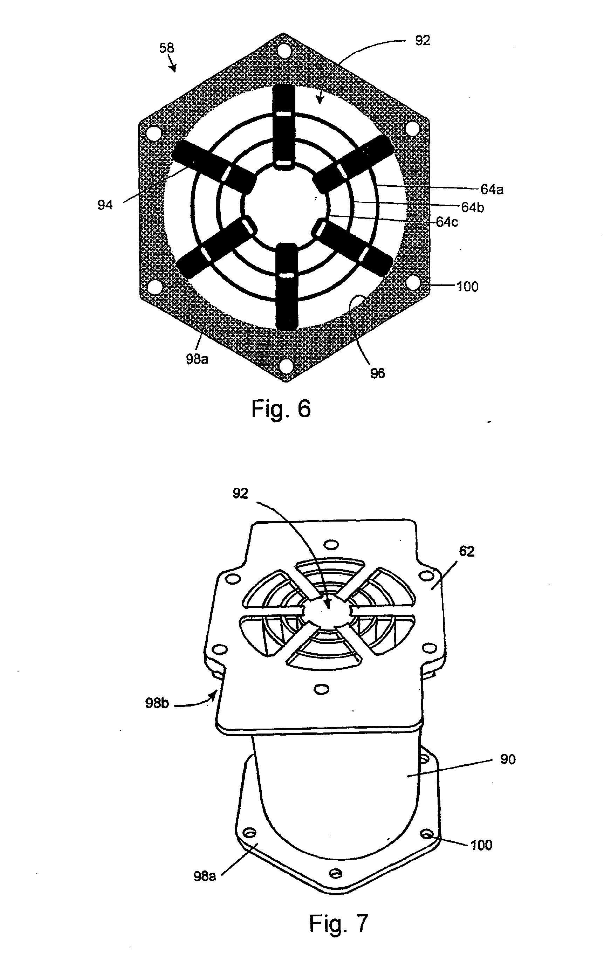

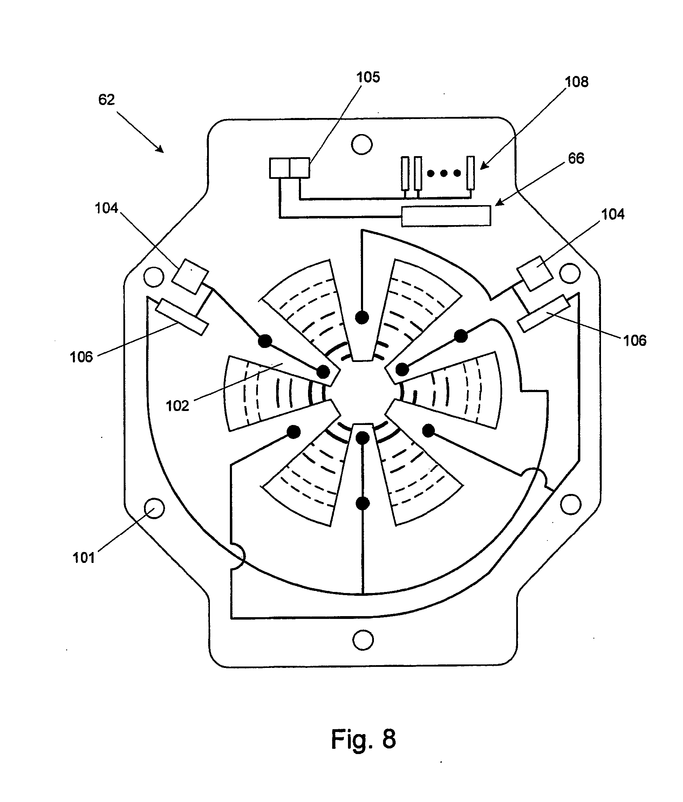

Moving now to Figs. 6 and 7, end and perspective views, respectively, of an exemplary compensator section 58 in accordance with the present invention are shown (Fig. 7 also shows the circuit card 62, which is described in more detail with respect to Fig. 8). The exemplary compensator section 58 is formed having an annular tube section 90 that defines a flow passage 92 through which fluid may flow. As noted above, the annular shape is merely exemplary, and other shapes may be utilized without departing from the scope of the invention. Preferably, the shape of the compensator flow passage 92 corresponds to the shape of the densitometer flow passage 70 so as to minimize fluid disturbance and/or flow resistance.

Arranged within the flow passage 92 are cylinders 64a, 64b and 64c, which are formed from a conductive material, such as aluminum, for example, and held in place via a Y-shaped circuit card 93, used a mechanical support. Tabs at the end of the cylinders 64a, 64b and 64c are attached to this circuit card, preferably via soldering. Flanges 98a and 98b are formed on respective ends of the tube section 90 and configured for coupling the compensator section to another device (e.g., the densitometer section 60, fuel delivery pipes 52 or 54 and/or tank 14). Each flange 98a and 98b includes a plurality of bores 100 for receiving fasteners (not shown) to couple the compensator section 58 to the densitometer section 60, fuel delivery pipes 52 or 54, and/or tank 14.

As described in more detail below, the outer and inner cylinders 64a and 64c are electrically coupled to one another, while the intermediate cylinder 64b is electrically isolated from the outer and inner cylinders 64a and 64c. The outer and intermediate cylinders 64a and 64b form a first capacitor, and the intermediate and inner cylinders 64b and 64c form a second capacitor, wherein the dielectric material of each capacitor is the fuel flowing through the flow passage 92. The capacitance of the two capacitors is measured to determine a permittivity of the fuel passing through the compensator section 58 using known techniques. The multi-cylinder approach implemented in the compensator section 58 increases the total capacitance of the compensator section, which minimizes errors due to stray capacitances. Further, the multi-cylinder design of the compensator section 58 minimizes flow resistance and disturbance during the fuel filling process and keeps the compensator section as short as possible (which also decreases the weight of the IFPMU, since it shortens the outer pipe length).

Referring now to Fig. 8, there is shown an exemplary circuit card 62 in accordance with the present invention, wherein the circuit card 62 is shown coupled to cylinders 64a, 64b and 64c. Due to the mounting of the circuit card 62 between the densitometer section 60 and the compensator section 58, the circuit card 62 is subjected to full fuel pressure and fuel flow during filling operations (for example at a pressure of up to 0.69 MPa (100 psi) and a fuel flow rate of 0.0063 $m^3.s^{-1}$ (1000 gallons per minute)). Thus, the circuit card 62 can comprise a structural element of the IFPMU 50 and, therefore, is configured to withstand such pressure and flow. The circuit card 62 is made of a material that is resistant to hydrocarbon fuels, and preferably formed from a circuit board that is at least about 4.4 mm (0.175 inch) thick. A plurality of bores 101 are formed in the circuit card 62 and correspond to bores 74 and 100 of the densitometer section 60 and compensator section 58.

The circuit card 62 includes a plurality of tabs 102 for electrically coupling the cylinders 64a, 64b and 64c of the compensator section 58 to the circuit card 62. Preferably, a solder connection is used to connect the tabs 102 to the cylinders 64a, 64b and 64c. Such arrangement of the tabs and end caps minimizes flow resistance and disturbance in the compensator section 58.

The tabs 102 are configured to electrically couple the outer and inner cylinders 64a and 64c to one another, while the intermediate cylinder 64b is electrically isolated from the outer and inner cylinders. For example, the tabs may include conductive traces that electrically couple the inner and outer cylinders 64a and 64c to one another as the tabs are soldered to the cylinders. Further, each tab 102 is electrically coupled to a connector terminal 104 (for example by means of a conductive trace), thereby providing a means for electrically connecting the cylinders 64a, 64ba and 64c to other equipment, such as the fuel gauging system 56. The circuit card 62 can also include bleed resistors 106 (for example a 10 MΩ resistor) electrically coupled between each cylinder and ground, wherein the bleed resistors function to discharge static build up on the cylinders 64a, 64b and 64c. The circuit board traces that electrically connect the cylinders to the connector terminals are buried on inner layers to provide a minimal insulation thickness in order to meet intrinsic safety requirements. In addition, these traces are placed so as to minimize the overlapping of electrical connections between the two electrodes in order to minimize the capacitance added by the board.

The circuit card 62 also can include an electronic memory module 66 for storing identification information, such as a serial number or the like, as well as calibration information. The calibration information can include, for example, correction factors, scaling factors, serial numbers, etc. as described herein. The memory module 66 can employ conventional techniques for storing data, including flash memory, RFID, etc. Additionally or alternatively, the identification information may be hard-coded on the circuit card 62 using, for example, a plurality of resistors or jumpers 108 to uniquely identify the IFPMU 50. In this manner, the identification information can be retrieved from the IFPMU even in the event the memory module 66 fails. The memory module 66 and/or hard-coded identifier means are electrically coupled to connector 105, which provides a means for retrieving calibration and identification information from the circuit card 62.

While the circuit card 62 is shown in the figures as a structural member of the IFPMU 50, such circuit card may be separate from the IFPMU and/or reside on the IFPMU as a non-structural member. For example, the circuit card may be mounted on an outer portion of the compensator section 58 and/or densitometer section 60 that is not exposed to fluid flow. The circuit card then can be coupled to components of the respective sections via conductors, such as wires for example. Alternatively, the circuit card 62 may be located remote from the IFPMU 50 (e.g., in an environmentally controlled area) and electrically coupled to the components of the respective sections via conductors.

The IFPMU 50 in accordance with the present invention is lighter than existing fuel gauging devices, and is exposed to the entire fuel flow, thereby allowing it to more accurately measure the fuel properties. Further, it is simpler in design and, thus, is less expensive to manufacture and requires less labour to assemble. Also, the IFPMU 50 includes detailed calibration information for both the densitometer section 60 and compensator section 58, thereby making it much more accurate than conventional fuel gauging devices.

## Claims

1. An in-line fuel properties measurement unit (IFPMU) (50) for in-line assembly in a fluid flow path, in particular a fuel flow path of an aircraft (55), the measurement unit comprising:

   a compensator section (58) having a first flow passage (92) through which fluid can flow, the compensator section being configured to measure a permittivity of fluid passing through the first flow passage, the first flow passage including:

   an outer member (64a),
   an inner member (64c) arranged within the outer member, and
   an intermediate member (64b) arranged between the outer member and
   the inner member,

   so that the first flow passage is provided by an outer flow passage formed between the outer and intermediate members and an inner flow passage formed between the intermediate and inner members,
   a densitometer section (60) having a second flow passage (70) through which fluid can flow, the densitometer section being configured to measure the density of fluid passing through the second flow passage, the first and second flow passages being arranged in-line with one another so that fluid flowing through the first flow passage or the second flow passage also flows through the other of the first flow passage and the second flow passage, so that each of the compensator and densitometer sections sees the full fluid flow, and
   a circuit board (62) electrically coupled to the compensator section and having an opening formed therein to correspond with the first flow passage,
   **characterised in that** the circuit board includes at least one first tab (102) electrically coupled to both the outer member and inner member of the compensator section, and at least one second tab (102) electrically coupled to the intermediate member.

2. The unit according to claim 1, in which the first flow passage (92) is further provided by an additional flow passage formed within the inner member (64c).

3. The unit according to claim 1, in which the circuit board (62) includes circuitry (66, 108) configured to store at least one of information that uniquely identifies the unit or calibration information for the compensator section (58) and/or densitometer section (60).

4. The unit according to claim 1, in which the densitometer section (60) comprises a sensing element (82) arranged within the second flow passage (70), the sensing element being configured to obtain data corresponding to a density of the fluid passing through the second flow passage.

5. The unit according to any one of claims 1 to 4, which includes a temperature probe (80) arranged in the flow path of the densitometer section (60) or the compensator section (58).

6. The unit according to any one of claims 1 to 5, in which the first flow passage (92) and second flow passage (70) are formed as annular flow passages.

7. A vehicle fuel storage system, comprising:

at least one storage tank (14); and
the unit (50) according to any one of claims 1 to 6, in which the unit is in-line with fuel provided to the at least one storage tank.

8. The vehicle fuel storage system according to claim 7, which includes a fuel pipe (52, 54) for providing fuel to the at least one storage tank (14), in which the unit is arranged in-line with the fuel pipe.

9. The vehicle fuel storage system according to claim 7 or claim 8, in which the unit is arranged at least partially in the at least one storage tank (14).

10. The vehicle fuel storage system according to any one of claims 7 to 9, further comprising a fuel gauging system (56) which is operatively coupled to the unit and configured to determine a mass of fuel delivered to the at least one storage tank based on data obtained by the unit.

**Patentansprüche**

1. Eine Inline-Messeinheit (50) für Kraftstoffeigenschaften (IFPMU) zur Inline-Anordnung in einem Flüssigkeitsströmungsweg, insbesondere einem Kraftstoffströmungsweg eines Flugzeugs (55), wobei die Messeinheit aufweist:

einen Kompensatorabschnitt (58), der einen ersten Strömungsweg (52) hat, durch welchen Flüssigkeit fließen kann, wobei der Kompensatorabschnitt derart eingerichtet ist, dass eine Leitfähigkeit von durch den ersten Strömungsweg hindurchströmender Flüssigkeit gemessen werden kann, wobei der erste Strömungsweg umfasst:

ein Außenbauteil (64a),
ein Innenbauteil (64c), das innerhalb des Außenbauteils angeordnet ist, und
ein Zwischenbauteil (64b), das zwischen dem Außenbauteil und dem Innenbauteil angeordnet ist,

so dass der erste Strömungsweg durch einen äußeren Strömungsweg, der zwischen dem Außenbauteil und dem Zwischenbauteil ausgebildet ist, und einem inneren Strömungsweg, der zwischen dem Zwischenbauteil und dem Innenbauteil ausgebildet ist, vorgegeben wird,
ein Dichtemessabschnitt (60), der einen zweiten Strömungsweg (70) hat, durch welchen Flüssigkeit fließen kann, wobei der Dichtemessabschnitt derart eingerichtet ist, dass die Dichte von durch den zweiten Strömungsweg hindurchströmender Flüssigkeit gemessen werden kann, wobei der erste Strömungsweg und der zweite Strömungsweg in Reihe hintereinander angeordnet sind,
so dass Flüssigkeit, welche durch den ersten Strömungsweg oder den zweiten Strömungsweg hindurchfließt auch durch den anderen der beiden Strömungswege hindurchfließt, so dass sowohl der Kompensatorabschnitt als auch der Dichtemessabschnitt die gesamte Flüssigkeitsströmung erfasst, und

eine Platine (62), die elektrisch mit dem Kompensatorabschnitt verbunden ist und eine in sich ausgebildete Öffnung hat, um mit dem ersten Strömungsweg zu korrespondieren,

**dadurch gekennzeichnet, dass** die Platine mindestens eine erste Lasche (102), die elektrisch sowohl mit dem Außenbauteil als auch mit dem Innenbauteil des Kompensatorabschnitts verbunden ist, und mindestens eine zweite Lasche (102) umfasst, die elektrisch mit dem Zwischenbauteil verbunden ist.

2. Die Einheit nach Anspruch 1, bei welcher der erste Strömungsweg (92) ferner durch einen zusätzlichen in dem Innenbauteil (64c) ausgebildeten Strömungsweg vorgegeben wird.

3. Die Einheit nach Anspruch 1, bei welcher die Platine (62) eine Schaltung (66, 108) umfasst, die dazu eingerichtet ist, Informationen, die eindeutig die Einheit identifizieren, und/oder Kalibrierinformationen für den Kompensatorabschnitt (58) und/oder Kalibrierinformationen für den Dichtemessabschnitt (60) zu speichern.

4. Die Einheit nach Anspruch 1, bei welcher der Dichtemessabschnitt (60) ein Erfassungselement (82) aufweist, das in dem zweiten Strömungsweg (70) angeordnet ist, wobei das Erfassungselement derart eingerichtet ist, dass Daten erhalten werden, die einer Dichte der durch den zweiten Strömungsweg hindurchströmenden Flüssigkeit entsprechen.

5. Die Einheit nach einem der Ansprüche 1 bis 4, welche eine Temperatursonde (80) umfasst, die in dem Strömungsweg des Dichtemessabschnitts (60) oder des Kompensatorabschnitts (58) angeordnet ist.

6. Die Einheit nach einem der Ansprüche 1 bis 5, bei welcher der erste Strömungsweg (92) und der zweite Strömungsweg (70) als ringförmige Strömungsdurchgänge ausgebildet sind.

7. Ein Fahrzeug-Kraftstoffspeichersystem, welches aufweist:

mindestens einen Speichertank (14); und
die Einheit (50) nach einem der Ansprüche 1 bis 6, wobei die Einheit inline zu Kraftstoff ist, der dem mindestens einen Speichertank zugeführt wird.

8. Das Fahrzeug-Kraftstoffspeichersystem nach Anspruch 7, welches eine Kraftstoffleitung (52, 54) zum Bereitstellen von Kraftstoff zu dem mindestens einen Speichertank (14) umfasst, wobei die Einheit inline zu der Kraftstoffleitung angeordnet ist.

9. Das Fahrzeug-Kraftstoffspeichersystem nach Anspruch 7 oder Anspruch 8, bei welchem die Einheit zumindest teilweise in dem mindestens einen Speichertank (14) angeordnet ist.

10. Das Fahrzeug-Kraftstoffspeichersystem nach einem der Ansprüche 7 bis 9, das ferner ein Kraftstoffmesssystem (56) aufweist, welches mit der Einheit wirkmäßig verbunden und derart eingerichtet ist, dass basierend auf von der Einheit ermittelten Daten eine Kraftstoffmenge bestimmt wird, die dem mindestens einen Speichertank zugeführt wird.

**Revendications**

1. Unité de mesure de propriétés de combustible en ligne (« In-line Fuel Properties Measurement Unit » ou IFPMU) (50) destinée à être assemblée en ligne dans un trajet d'écoulement de fluide, en particulier un trajet d'écoulement de combustible d'un aéronef (55), l'unité de mesure comprenant :

une section compensatrice (58) comportant un premier passage d'écoulement (92) à travers lequel un fluide peut s'écouler, la section compensatrice étant configurée pour mesurer une permittivité du fluide passant à travers le premier passage d'écoulement, le premier passage d'écoulement comprenant :

un élément extérieur (64a),
un élément intérieur (64c) agencé à l'intérieur de l'élément extérieur, et
un élément intermédiaire (64b) agencé entre l'élément extérieur et

l'élément intérieur,

pour que le premier passage d'écoulement soit fourni par un passage d'écoulement extérieur formé entre les éléments extérieur et intermédiaire et un passage d'écoulement intérieur formé entre les éléments intermédiaire et intérieur,

une section densitométrique (60) comportant un second passage d'écoulement (70) à travers lequel un fluide peut s'écouler, la section densitométrique étant configurée pour mesurer la densité du fluide passant à travers le second passage d'écoulement, les premier et second passages d'écoulement étant agencés en ligne l'un avec l'autre pour que le fluide s'écoulant à travers le premier passage d'écoulement ou le second passage d'écoulement s'écoule également à travers l'autre parmi le premier passage d'écoulement et le second passage d'écoulement, pour que chacune parmi la section compensatrice et la section densitométrique voit l'écoulement de fluide complet, et

une carte de circuit imprimé (62) couplée électriquement à la section compensatrice et comportant une ouverture formée dans celle-ci pour correspondre avec le premier passage d'écoulement,

**caractérisée en ce que** la carte de circuit imprimé comprend au moins une première languette (102) couplée électriquement à l'élément extérieur et à élément intérieur de la section compensatrice, et au moins une seconde languette (102) couplée électriquement à l'élément intermédiaire.

2. Unité selon la revendication 1, dans laquelle le premier passage d'écoulement (92) est en outre fournie par un passage d'écoulement supplémentaire formé à l'intérieur de l'élément intérieur (64c).

3. Unité selon la revendication 1, dans laquelle la carte de circuit imprimé (62) comprend une circuiterie (66, 108) configurée pour stocker au moins une parmi une information qui identifie de façon unique l'unité ou une information d'étalonnage pour la section compensatrice (58) et/ou la section densitométrique (60).

4. Unité selon la revendication 1, dans laquelle la section densitométrique (60) comprend un élément capteur (82) agencé à l'intérieur du second passage d'écoulement (70), l'élément capteur étant configuré pour obtenir des données correspondant à une densité du fluide passant à travers le second passage d'écoulement.

5. Unité selon une quelconque des revendications 1 à 4, qui comprend une sonde de température (80) agencée dans le trajet d'écoulement de la section densitométrique (60) ou la section compensatrice (58).

6. Unité selon une quelconque des revendications 1 à 5, dans laquelle le premier passage d'écoulement (92) et le second passage d'écoulement (70) présentent la forme de passages d'écoulement annulaires.

7. Système de stockage de combustible de véhicule, comprenant :

au moins un réservoir de stockage (14) ; et
l'unité (50) selon une quelconque des revendications 1 à 6, dans lequel l'unité est en ligne avec un combustible fourni à l'au moins un réservoir de stockage.

8. Système de stockage de combustible de véhicule selon la revendication 7, qui comprend un tuyau à combustible (52, 54) pour fournir un combustible à l'au moins un réservoir de stockage (14), dans lequel l'unité est agencée en ligne avec le tuyau à combustible.

9. Système de stockage de combustible de véhicule selon la revendication 7 ou la revendication 8, dans lequel l'unité est agencée au moins partiellement dans l'au moins un réservoir de stockage (14).

10. Système de stockage de combustible de véhicule selon une quelconque des revendications 7 à 9, comprenant en outre un système de jaugeage de combustible (56) qui est accouplé fonctionnellement avec l'unité et configuré pour déterminer une masse du combustible distribué à l'au moins un réservoir de stockage en fonction de données obtenues par l'unité.

10

12

Fuel fill inlet

Fuel fill path

14

18a    16    18b

Gauging device

Fig. 1A
PRIOR ART

16

28    18b

20    20b

34    22

32

26

24

20a    22a

18a    20c

30

Fig. 1B
PRIOR ART

Fig. 2

64

66

Memory
module

60

58

62

Fig. 3

50

63

58

60

Fig. 4

Fig. 5A

Fig. 5C

Fig. 5B

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4262531 A

- US 5345811 A